# EUROPEAN PATENT SPECIFICATION

(11) **EP 2 521 406 B1**
(45) Date of publication and mention of the grant of the patent: **31.12.2014**
(21) Application number: 11305522.2
(22) Date of filing: 03.05.2011
(51) Int. Cl.: H04W 56/00, H04W 88/06

(54) **Reference clock management**
Referenztaktverwaltung
Gestion d'horloge de référence

(43) Date of publication of application: 07.11.2012
(73) Proprietor: ST-Ericsson SA, 1228 Plan-les-Ouates (CH)
(72) Inventor: Josso, Nicolas, 72240 La Chapelle Saint Fray (FR)
(74) Representative: Cabinet Plasseraud

(56) References cited:
- WO-A1-2008/139348
- WO-A2-2008/021810
- US-A1- 2006 205 373
- US-A1- 2009 131 054

## Description

### TECHNICAL FIELD

The present invention relates to multiple subscriber identity devices and methods for controlling an adjustment of a reference clock of a multiple subscriber identity device.

### BACKGROUND

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section. Furthermore, all embodiments are not necessarily intended to solve all or even any of the problems brought forward in this section.

Dual SIM Dual Standby (DSDS) modems comprise means for receiving messages associated with at least two subscriber identities.

Consequently, a DSDS modem can camp on two different cells relating for example to two different networks or, within a same network, relating to two different radio access technologies (RAT). A DSDS modem can also camp on same cell and same RAT in same network, e.g. the DSDS modem may comprise a first SIM, being a work SIM, and a second SIM, being a private SIM.

A DSDS modem may be switched between an idle mode, in which the modem only listens to paging messages, and a dedicated mode, in which the modem has an active connection. The idle mode may comprise an idle continuous reception (no-DRX) mode and/or an idle discontinuous reception (DRX) mode.

A DSDS modem may be able to monitor both subscriber identities in DRX mode, but only one subscriber identity in idle no-DRX mode and dedicated mode. This constraint is due to the fact that a DSDS modem is generally based on one baseband (BB) module and one radiofrequency (RF) module that may be shared between both subscriber identities in idle DRX mode but that cannot be shared in idle no-DRX and dedicated modes.

The fact that DSDS modem is based on one BB module and one RF module induces that both subscriber identities have also to share the same platform reference clock.

In mobile phone system the reference clock may be adjusted to a network reference clock in order to compensate natural derivate and Doppler effects due to mobility.

In a software point of view, a DSDS modem generally comprises two protocol stack blocks, each of these protocol stack blocks being associated with one subscriber identity. Each protocol stack block handles an Automatic Frequency Correction (AFC) algorithm to keep synchronization with the corresponding network.

One problem in idle DRX mode is that each protocol stack block executes its own Automatic Frequency Correction (AFC) algorithm. Thus, two different executions of an AFC algorithm try to control the reference clock. It should be noted that both AFC algorithms can control the master clock but only one at a time. This means that only one protocol stack will control the AFC and the second one will trust on the correction of the first one. This may induce some inconsistency in the reference clock adjustment.

For example, in case only one AFC algorithm controls the master clock, the second SIM may loss the network synchronization because of opposite Doppler effect between both SIM, which leads the AFC to correct the frequency offset for one SIM but to increase the frequency offset for the second SIM. The second SIM may also loss the network synchronization because of frequency desynchronization on network side. Indeed, cells on different network (or on different access technologies) can have a frequency error too high to allow the User Equipment (UE) to listen to both by using AFC information of only one network.

In case both AFC algorithms are used to compensate the master clock, both issues highlighted when only one AFC algorithm is running are still true. The main difference is that in that case the main issue is to never converge on an optimum frequency clock for both subscriptions.

For example, a frequency desynchronization due to Doppler effect can arise when a DSDS UE in mobility mode camps on two cells. DSDS UE is going closer to the Base Station of the first SIM (so Doppler effect is decreasing) and is moved away from the Base station of the second SIM (so Doppler effect is increasing). So, the first SIM will adapt the master clock to correct the effect of the Doppler and the second SIM will do the opposite. This means that the first SIM will perform some measurement on the first SIM network and will perform a master clock compensation. Then the second SIM will also perform some measurement (on the second SIM network) and will perform some master clock compensation. In this situation, the second SIM performs some network measurement with a master clock compensate for the first SIM (on the opposite) which will induce a high frequency error and a risk to loss synchronization with network.

WO2008/139348 discloses a method for synchronizing at least two communication systems within a multi-standard wireless system.

There is a need for improved methods and devices for avoiding these and other problems.

### SUMMARY

To address these needs, embodiments of this invention provide some solutions to arbitrate the potential conflict between several subscriptions versus the management of the system reference clock.

A first aspect of the present invention relates to a multi SIM modem adapted to receive messages related to at least two subscriber identities, characterized in that it comprises:
- a reference clock module configured to define a reference clock for the multi SIM modem,
- a first protocol stack block configured to measure a first frequency error between the multi SIM modem and a cell related to a first subscriber identity,
- a second protocol stack block configured to measure a second frequency error between the multi SIM modem and a cell related to a second subscriber identity, and
- a reference clock management block configured to control an adjustment of the reference clock in the reference clock module, based on information from the first and second protocol stack blocks.

One of the aims for this modem is to avoid inducing inconsistency in the reference clock adjustment, in particular when the multi SIM modem is in idle DRX mode.

The multi SIM modem may be configured to determine a reference clock adjustment to be applied based on a set of measured first and/or second frequency errors, by using an AFC algorithm.

According to some embodiments of the invention, the information comprises the first and second measured frequency errors and the reference clock management block is configured to:
- get the measured first and second frequency errors from the first and second protocol stack blocks respectively,
- determine a reference clock adjustment based on the measured first and second frequency errors, and
- control the adjustment of the reference clock in the reference clock module based on the determined reference clock adjustment.

The determination of a reference clock adjustment may be performed by using a first number of measured first frequency errors from the first protocol stack block, and a second number of measured second frequency errors from the second protocol stack block, the first and second numbers being equal.

According to some embodiments of the invention, the reference clock management block is configured to:
- select, among the first and second protocol stack blocks, the protocol stack block to be used to determine a reference clock adjustment,
- get, from the selected protocol stack block, a reference clock adjustment determined based on a frequency error measured by the selected protocol stack block, and
- control the adjustment of the reference clock in the reference clock module based on the received reference clock adjustment.

The information may comprise at least one of a DRX cycle information and a radio quality information and wherein the selection depends on an idle discontinuous reception configuration and/or on an idle serving quality.

The multi SIM modem may be further adapted to receive messages related to a third subscriber identity, the reference clock management block being configured to:
- get the measured first and second frequency errors from the first and second protocol stack blocks respectively, and determine a reference clock adjustment based on the measured first and second frequency errors,
- select, among the reference clock adjustment determined from the first and second protocol stack block and a reference clock adjustment from the third protocol stack block, the one to be used to control the adjustment of the reference clock in the reference clock module,
- control the adjustment of the reference clock in the reference clock module based on the selected reference clock adjustment.

A second aspect of the present invention relates to a mobile device comprising a multi SIM modem according to the first aspect, and a reception/transmission module for receiving and/or transmitting signals, the reception/transmission module being coupled to the multi SIM modem.

The mobile device may be associable with at least a first and second SIM.

A third aspect of the present invention relates to method of data processing for controlling an adjustment of a reference clock of a multi SIM modem adaptable to receive messages related to at least two subscriber identities, comprising steps of:
- measuring, at a first protocol stack block of the multi SIM modem, a first frequency error between the multi SIM modem and a cell related to a first subscriber identity,
- measuring, at a second protocol stack block of the multi SIM modem, a second frequency error between the multi SIM modem and a cell related to a second subscriber identity, and
- controlling, at a reference clock management block of the multi SIM modem, an adjustment of the reference clock, based on information from the first and second protocol stack blocks.

The information may comprise the first and second measured frequency errors, the method comprising steps of, at the reference clock management block:
- getting the measured first and second frequency errors from the first and second protocol stack blocks respectively,
   determining a reference clock adjustment based on the measured first and second frequency errors, and
- controlling the adjustment of the reference clock based on the determined reference clock adjustment.

The method may comprise steps of, at the reference clock management block:
- selecting, among the first and second protocol stack blocks, the protocol stack block to be used to determine a reference clock adjustment,
- getting, from the selected protocol stack block, a reference clock adjustment determined based on a frequency error measured by the selected protocol stack block, and
- controlling the adjustment of the reference clock in the reference clock module based on the received reference clock adjustment.

The information may comprise at least one of a DRX cycle information and a radio quality information and the selection may depend on an idle discontinuous reception configuration and/or on an idle serving quality.

A fourth aspect of the present invention relates to a computer program product comprising a computer readable medium, having thereon a computer program comprising program instructions, the computer program being loadable into a data-processing unit and adapted to cause the data-processing unit to carry out the steps of the method according to the third aspect when the computer program is run by the data-processing unit.

### BRIEF DESCRIPTION OF THE DRAWINGS

Embodiments of the present invention is illustrated by way of example, and not by way of limitation, in the figures of the accompanying drawings, in which like reference numerals refer to similar elements and in which:
- Fig.1 is a schematic block diagram of a mobile device according to some embodiments of the invention;
- Fig.2 is a schematic block diagram of a multi SIM modem of the mobile device according to some embodiments of the invention;
- Fig.3 is a schematic block diagram of a multi SIM modem of the mobile device according to some embodiments of the invention;
- Fig.4 is a flow chart showing steps of a method of controlling an adjustment of a reference clock of the multi SIM modem according to some embodiments of the invention;
- Fig.5 is a schematic block diagram of a multi SIM modem of the mobile device according to some embodiments of the invention; and
- Fig.6 is a flow chart showing steps of a method of controlling an adjustment of a reference clock of the multi SIM modem according to some embodiments of the invention.

### DESCRIPTION OF EMBODIMENTS

Embodiments of the invention deal with the problem of arbitrating the potential conflict between several subscriptions versus the management of the system reference clock, in particular in the case of a multi SIM modem in idle DRX mode.

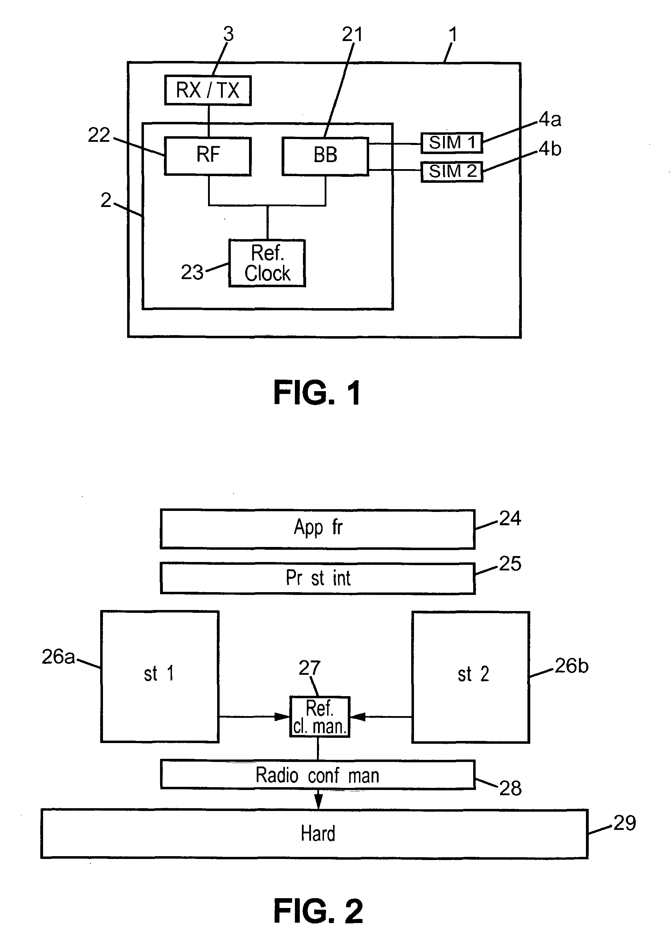

**Fig.1** shows hardware blocks of a mobile device 1, for example a mobile phone, according to embodiments of the invention. The mobile device 1 comprises a multi SIM modem 2, for example a Dual SIM Dual Standby (DSDS) modem. According to other embodiments, the multi SIM modem 2 may be, for example, a triple SIM Triple Standby (TSTS) modem.

The mobile device 1 further comprises a reception/transmission module 3, for example an antenna system, configured to receive and/or transmit signals.

The modem 2 comprises a baseband (BB) module 21, configured to perform a number of data processing operations and/or signal processing operations at baseband frequencies. The BB module 21 comprises two connectors to be connected to a first subscriber identity module 4a and to a second subscriber identity module 4b.

The modem 2 further comprises a radiofrequency (RF) module 22 configured to perform a number of signal processing operations, such as converting baseband signals from or to RF signals, filtering signals and/or (de)modulating signals. The RF module 22 is connected to the reception/transmission module 3 and to the BB module 21.

The modem 2 further comprises a reference clock module 23 configured to define a reference clock for the modem 2. The reference clock module 23 is connected to the BB module 21 and to the RF module 22.

**Fig.2** shows software blocks of the DSDS modem 2 according to some embodiments of the invention. The DSDS modem 2 comprises an applicative framework block 24, a protocol stack interface block 25, a first protocol stack block 26a, a second protocol stack block 26b, a reference clock management block 27, a radio conflict manager block 28, and hardware blocks 29.

The hardware blocks 29 comprise the baseband (BB) module 21, the radiofrequency (RF) module 22, and the reference clock module 23, described above.

The radio conflict manager block 28 is configured to manage the radio conflict between both protocol stack blocks 26a, 26b.

The protocol stack interface block 25 is configured to perform an interface between applicative framework block 24 and both protocol stack blocks 26a, 26b.

The protocol stack blocks 26a, 26b are respectively associated to the subscriber identity modules 4a, 4b.

The protocol stack block 26a is configured to manage activities related to the subscriber identity module 4a, i.e. synchronization to the network, system information reading, paging, neighbour cell environment tracking, etc. In particular, the protocol stack block 26a is configured to measure a frequency error between the modem 2 and a cell related to subscriber identity 4a.

In the same way, the protocol stack block 26b is configured to manage activities related to the subscriber identity module 4b, i.e. synchronization to the network, system information reading, paging, neighbour cell environment tracking, etc. In particular, the protocol stack block 26b is configured to measure a frequency error between the modem 2 and a cell related to subscriber identity 4b.

The reference clock management 27 is configured to control an adjustment of the reference clock in the reference clock module 23, based on information from the first and second protocol stack blocks 26a, 26b. Frequency errors are typically measured by each protocol stack independently. The frequency errors from the two stacks may then be processed in different ways according to different embodiments to determine a reference clock adjustment as will be explained in the following.

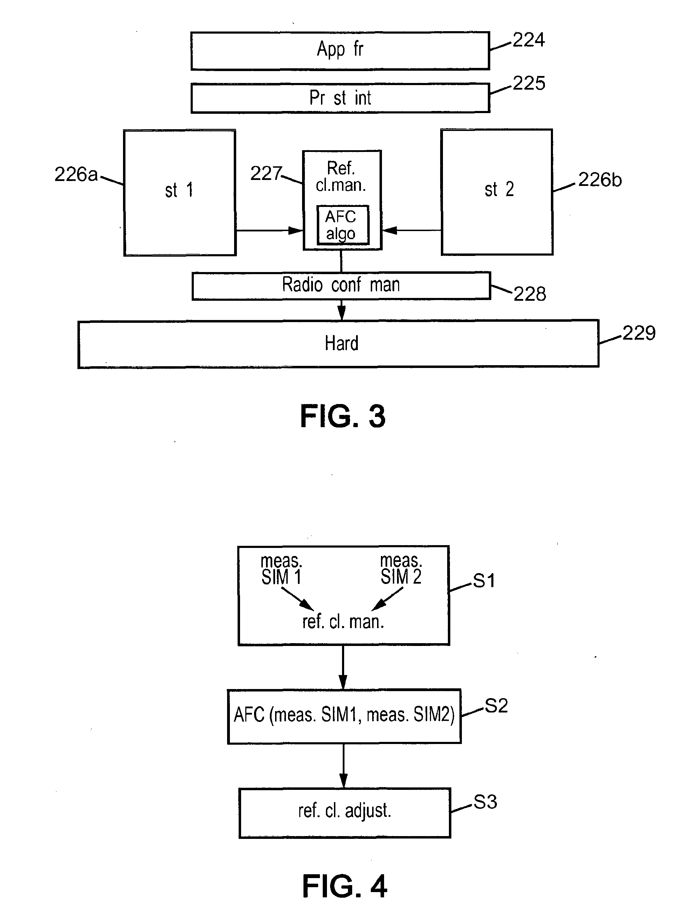

**Fig.3** shows software blocks of the DSDS modem 2 according to some embodiments of the invention. The DSDS modem 2 comprises an applicative framework block 224, a protocol stack interface block 225, a first protocol stack block 226a, a second protocol stack block 226b, a reference clock management block 227, a radio conflict manager block 228, and hardware blocks 229.

The hardware blocks 229 comprise the baseband (BB) module 21, the radiofrequency (RF) module 22, and the reference clock module 23, described above.

The radio conflict manager block 228 is configured to manage the radio conflict between both protocol stack blocks 226a, 226b.

The protocol stack interface block 225 is configured to perform an interface between applicative framework block 224 and both protocol stack blocks 226a, 226b.

The protocol stack blocks 226a, 226b are respectively associated to the subscriber identity modules 4a, 4b.

The protocol stack block 226a is configured to manage activities related to the subscriber identity module 4a, i.e. synchronization to the network, system information reading, paging, neighbour cell environment tracking, etc. In particular, the protocol stack block 226a is configured to measure a frequency error between the modem 2 and a cell related to subscriber identity 4a.

In the same way, the protocol stack block 226b is configured to manage activities related to the subscriber identity module 4b, i.e. synchronization to the network, system information reading, paging, neighbour cell environment tracking, etc. In particular, the protocol stack block 226b is configured to measure a frequency error between the modem 2 and a cell related to subscriber identity 4b.

The reference clock management block 227 comprises an AFC algorithm configured to determine a reference clock adjustment to be applied, based on frequency errors measured by both protocol stack blocks 226a, 226b. Thus, the AFC algorithm, which is common for both protocol stack blocks 226a, 226b, permits to adjust the reference clock to a network reference clock in order to compensate natural derivate and Doppler effects due to the mobility, without inducing some inconsistency in the reference clock management.

AFC samples may be measured by the mobile device 1 during the reception of a control channel or a dedicated channel. This means that each time the mobile device 1 receives some information from the network (for example a Paging reading or a System information reading) the mobile device 1 computes a frequency error during this reception.

As a general behaviour an AFC algorithm will accumulate a number N of samples before applying a frequency correction on the hardware block. Then before applying a new correction, the AFC algorithm needs to accumulate again N samples. The main reason is to avoid considering some radio samples that could have been impacts by fading or interference. AFC algorithm may be based on basic averaging (frequency accumulation errors divided by N samples) or some weights could be applied. For example a higher reception level will induce a higher accuracy on the frequency error estimation and so some weight may be based on reception level of each AFC samples.

The AFC algorithm of the reference clock management block 227 is implemented to use sample of both protocol stacks 226a, 226b. The AFC should still behave on an accumulation mechanism but this accumulation should be fair between both protocol stacks. Indeed, if both protocol stacks 226a, 226b have different DRX cycle, the number of accumulated samples will be different on a specific timing (more samples with lower DRX). This means that if the AFC is still based on N samples before correction, N/2 samples should come from contribution of stack 226a and N/2 samples should come from contribution of stack 226b. Then as for a mono-SIM device the averaging could be basic (total error frequency / N samples) or some weights could be applied between the samples based on reception quality.

For the handling of the different samples within a mobile device, it may be considered that the reference clock management gets all the needed information from stacks 226a and 226b (frequency error estimation, reception quality, ...) and then it is up to the reference clock management block 227 to handles this samples through a database or by global variable.

Both protocol stack blocks 226a, 226b may share a common database containing their respective measured frequency errors.

Referring to **Fig.4**, we are describing below a method of controlling an adjustment of a reference clock of a multi SIM modem according to embodiments of the invention. This method may be executed by the modem 2 represented in Fig.3, for example when the modem 2 is in idle DRX mode. Indeed, when the modem 2 is in idle no-DRX mode or in dedicated mode only one subscription is active, so there is no problem of reference clock correction.

In step S1, protocol stack block 26a measures a frequency error between the modem 2 and a cell related to subscriber identity 4a, by using a signal received from the cell. Then, protocol stack block 226a transfers the measured frequency error to the reference clock management block 227. In some embodiments, the measurement may be stored in a database, which is then accessed by the reference clock management block 227.

In the same way, protocol stack block 226b measures a frequency error between the modem 2 and a cell related to subscriber identity 4b, by using a signal received from the cell. Then, protocol stack block 226b transfers the measured frequency error to the reference clock management block 227. In some embodiments, the measurement may be stored in a database, which is then accessed by the reference clock management block 227.

In step S2, the reference clock management block 227 gets measured frequency errors from both protocol stack blocks 226a, 226b, that is to say measured frequency errors related to both subscriber identities 4a, 4b.

Then, the AFC algorithm of the reference clock management block 227 determines a reference clock adjustment to be applied, based on frequency errors received from both protocol stack blocks 226a, 226b.

In step S3, the reference clock management block 227 controls the adjustment of the reference clock in the reference clock module 23.

The use of measured frequency errors from both subscriptions for the determination of a reference clock adjustment permits to find a compromise between the optimal frequency adjustments for each of the subscription identities. Thus, the performance of the modem 2 may be improved because the compromise enables the modem to adequately serve both subscription identities (e.g. by staying synchronized with respective networks). However, for each of the subscriptions the modem performance will typically be a bit inferior to the case of single subscription due to the frequency control compromise.

In particular, the use of measured frequency errors from both subscriptions allows to find a compromise between both SIM. Indeed, having an AFC algorithm that used samples from both stacks allows to mix frequency errors from both stacks and so to reach a compromise in the master clock correction. This limits the risk for the second SIM to loss the network synchronization.

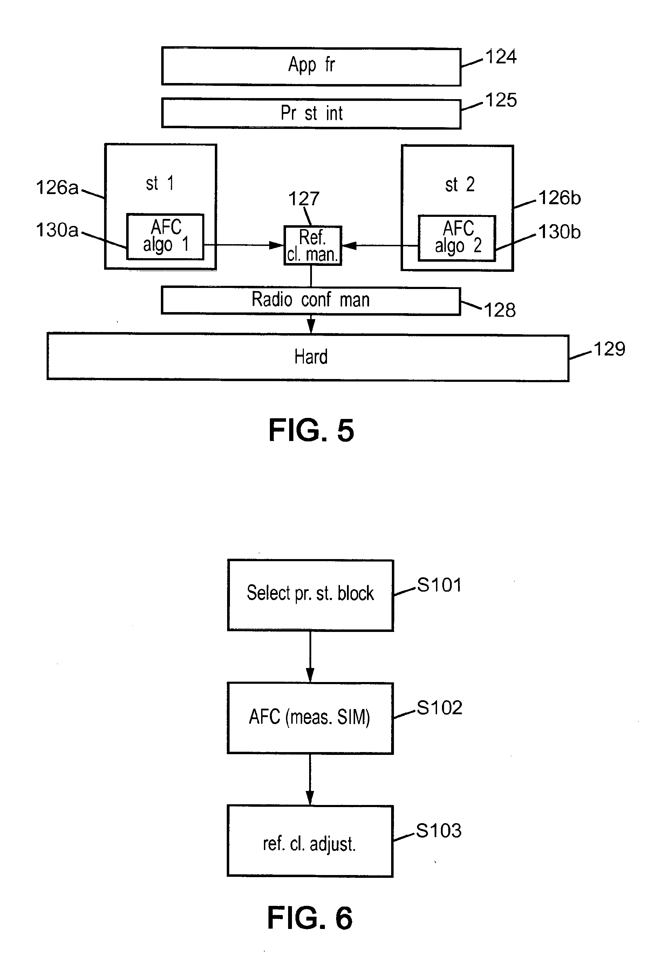

**Fig.5** shows software blocks of the DSDS modem 2 according to some embodiments of the invention. The DSDS modem 2 comprises an applicative framework block 124, a protocol stack interface block 125, a first protocol stack block 126a, a second protocol stack block 126b, a reference clock management block 127, a radio conflict manager block 128, and hardware blocks 129.

The hardware blocks 129 comprise the baseband (BB) module 21, the radiofrequency (RF) module 22, and the reference clock module 23 described above.

The radio conflict manager block 128 is configured to manage the radio conflict between both protocol stack blocks 126a, 126b.

The protocol stack interface block 125 is configured to perform an interface between applicative framework block 124 and both protocol stack blocks 126a, 126b.

The protocol stack blocks 126a, 126b are respectively associated to the subscriber identity modules 4a, 4b.

The protocol stack block 126a is configured to manage activities related to the subscriber identity module 4a, i.e. synchronization to the network, system information reading, paging, neighbour cell environment tracking, etc. In particular, the protocol stack block 126a is configured to measure a frequency error between the modem 2 and a cell related to subscriber identity 4a.

In the same way, the protocol stack block 126b is configured to manage activities related to the subscriber identity module 4b, i.e. synchronization to the network, system information reading, paging, neighbour cell environment tracking, etc. In particular, the protocol stack block 126b is configured to measure a frequency error between the modem 2 and a cell related to subscriber identity 4b.

Each protocol stack block 126a, 126b comprises an AFC algorithm module 130a, 130b configured to determine a reference clock adjustment, based on a frequency error measured by the said protocol stack block 126a, 126b.

The reference clock management block 127 comprises a decision algorithm configured to control the access to the reference clock module 23. In other words, the decision algorithm permits to control the adjustment of the reference clock in the reference clock module 23.

The reference clock management block 127 is configured to select one protocol stack versus the other. This selection is based on a set of criteria, comprising for example:
- the DRX length: a lower DRX length will induce more samples in the AFC algorithm and so will increase the frequency rate correction,
- the serving cell quality: better is the serving cell quality and better is the frequency error estimation and mobile device side, and/or
- the Radio Access technology: some radio access technologies are more or less sensitive to frequency error. For example LTE technology based on OFDMA is very sensitive to frequency error compare to 2G.

So the selection of the protocol stack block 126a, 126b that will control the AFC may be based on a mix of these different criteria. For example if both SIM are camped on the same radio access technology, the first criteria should be on the DRX cycle except if the cell with the lowest DRX cycle has a poor radio quality.

Referring to **Fig.6**, we are describing below a method of controlling an adjustment of a reference clock of a multi SIM modem according to other embodiments of the invention. This method may be executed by the modem 2 represented in Fig.5, for example when the modem 2 is in idle DRX mode.

In step S101, the reference clock management block 127 uses the decision algorithm to select, among both protocol stack blocks 126a and 126b, the protocol stack block 126a or 126b to be used to determine a reference clock adjustment.

The selection may depend on an idle DRX configuration. Indeed, AFC algorithm may have better performance in lower DRX case, that is to say when the modem 2 has to monitor the paging channel (PCH) more frequently. So if SIM1 has lower DRX than SIM2, SIM1 might be best to use for AFC.

The selection may alternatively depend on an idle serving quality. Indeed, frequency error estimation is better in good radio condition.

The selection may alternatively depend on a combination of both criteria.

In step S102, the AFC algorithm of the selected protocol stack block 126a, 126b determines a reference clock adjustment to be applied, based on a frequency error measured by the selected protocol stack block 126a, 126b.

Then, the selected protocol stack block 126a, 126b transfers the determined reference clock adjustment to the reference clock management block 127.

In step S103, the reference clock management block 127 controls the adjustment of the reference clock in the reference clock module 23.

The other protocol stack block 126a, 126b may continue its radio activities but its measured frequency error is not used to adjust the reference clock.

Thus, only one AFC algorithm is used to determine a reference clock adjustment in this embodiment. This permits to avoid inducing some inconsistency in the reference clock adjustment.

Embodiments of the invention have been described using physical subscriber identity modules (SIM cards) as an example of how a subscriber identity may be defined. However, this must not be the case in alternative embodiments. In such alternative embodiments, one or more of the subscriber identities may be provided to the mobile terminal in the form of a SIM software application executed in the terminal, and/or as a virtual SIM which is "stolen" or "borrowed" from another device and is rendered accessible to the terminal by way of an appropriate interface.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the invention as broadly defined above.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

A person skilled in the art will readily appreciate that various parameters disclosed in the description may be modified and that various embodiments disclosed may be combined without departing from the scope of the invention.

## Claims

1. Multi SIM modem (2) adapted to receive messages related to at least two subscriber identities (4a, 4b), **characterized in that** it comprises:
- a reference clock module (23) configured to define a reference clock for the multi SIM modem,
- a first protocol stack block (26a, 126a, 226a) configured to measure a first frequency error between the multi SIM modem and a cell related to a first subscriber identity,
- a second protocol stack block (26b, 126b, 226b) configured to measure a second frequency error between the multi SIM modem and a cell related to a second subscriber identity, and
- a reference clock management block (27, 127, 227) configured to control an adjustment of the reference clock in the reference clock module, based on information from the first and second protocol stack blocks.

2. Multi SIM modem (2) according to claim 1, configured to determine a reference clock adjustment to be applied, based on a set of measured first and/or second frequency errors, by using an AFC algorithm.

3. Multi SIM modem according to claim 1, wherein the information comprises the first and second measured frequency errors and wherein the reference clock management block (227) is configured to:
- get the measured first and second frequency errors from the first and second protocol stack blocks (226a, 226b) respectively,
- determine a reference clock adjustment based on the measured first and second frequency errors, and
- control the adjustment of the reference clock in the reference clock module (23) based on the determined reference clock adjustment.

4. Multi SIM modem according to claim 3, wherein the determination of a reference clock adjustment is performed by using a first number of measured first frequency errors from the first protocol stack block (226a), and a second number of measured second frequency errors from the second protocol stack block (226b), the first and second numbers being equal.

5. Multi SIM modem according to claim 1, wherein the reference clock management block (127) is configured to:
- select, among the first and second protocol stack blocks (126a, 126b), the protocol stack block to be used to determine a reference clock adjustment,
- get, from the selected protocol stack block, a reference clock adjustment determined based on a frequency error measured by the selected protocol stack block, and
- control the adjustment of the reference clock in the reference clock module (23) based on the received reference clock adjustment.

6. Multi SIM modem according to claim 5, wherein the information comprises at least one of a DRX cycle information and a radio quality information and wherein the selection depends on an idle discontinuous reception configuration and/or on an idle serving quality.

7. Multi SIM modem according to claim 1, further adapted to receive messages related to a third subscriber identity, the reference clock management block (227) being configured to:
- get the measured first and second frequency errors from the first and second protocol stack blocks (226a, 226b) respectively, and determine a reference clock adjustment based on the measured first and second frequency errors,
- select, among the reference clock adjustment determined from the first and second protocol stack block and a reference clock adjustment from the third protocol stack block, the one to be used to control the adjustment of the reference clock in the reference clock module (23),
- control the adjustment of the reference clock in the reference clock module (23) based on the selected reference clock adjustment.

8. Mobile device (1) comprising a multi SIM modem (2) according to one of the claims 1 to 7, and a reception/transmission module (3) for receiving and/or transmitting signals, the reception/transmission module being coupled to the multi SIM modem.

9. Mobile device according to claim 8, further associable with at least a first and second SIM.

10. Method of data processing for controlling an adjustment of a reference clock of a multi SIM modem (2) adaptable to receive messages related to at least two subscriber identities (4a, 4b), comprising steps of:
- measuring, at a first protocol stack block (26a, 126a, 226a) of the multi SIM modem, a first frequency error between the multi SIM modem and a cell related to a first subscriber identity,
- measuring, at a second protocol stack block (26b, 126b, 226b) of the multi SIM modem, a second frequency error between the multi SIM modem and a cell related to a second subscriber identity, and
- controlling, at a reference clock management block (27, 127, 227) of the multi SIM modem, an adjustment of the reference clock, based on information from the first and second protocol stack blocks.

11. Method according to claim 10, wherein the information comprises the first and second measured frequency errors, the method comprising steps of, at the reference clock management block (227):
- getting the measured first and second frequency errors from the first and second protocol stack blocks (226a, 226b) respectively,
- determining a reference clock adjustment based on the measured first and second frequency errors, and
- controlling the adjustment of the reference clock based on the determined reference clock adjustment.

12. Method according to claim 10, comprising steps of, at the reference clock management block (127):
- selecting, among the first and second protocol stack blocks (126a, 126b), the protocol stack block to be used to determine a reference clock adjustment,
- getting, from the selected protocol stack block, a reference clock adjustment determined based on a frequency error measured by the selected protocol stack block, and
- controlling the adjustment of the reference clock in the reference clock module based on the received reference clock adjustment.

13. Method according to claim 12, wherein the information comprises at least one of a DRX cycle information and a radio quality information and wherein the selection depends on an idle discontinuous reception configuration and/or on an idle serving quality.

14. Computer program product comprising a computer readable medium, having thereon a computer program comprising program instructions, the computer program being loadable into a data-processing unit and adapted to cause the data-processing unit to carry out the steps of any of claims 10 to 13 when the computer program is run by the data-processing unit.

## Patentansprüche

1. Multi-SIM-Modem (2), das so angepasst ist, dass es Nachrichten empfängt, die im Zusammenhang mit mindestens zwei Teilnehmeridentitäten (4a, 4b) stehen, **dadurch gekennzeichnet, dass** es umfasst:
• ein Referenztaktmodul (23), das so konfiguriert ist, dass es einen Referenztakt für das Multi-SIM-Modem bestimmt,
• einen ersten Protokollstapelblock (26a, 126a, 226a), der so konfiguriert ist, dass er einen ersten Frequenzfehler zwischen dem Multi-SIM-Modem und einer Zelle im Zusammenhang mit einer ersten Teilnehmeridentität misst,
• einen zweiten Protokollstapelblock (26b, 126b, 226b), der so konfiguriert ist, dass er einen zweiten Frequenzfehler zwischen dem Multi-SIM-Modem und einer Zelle im Zusammenhang mit einer zweiten Teilnehmeridentität misst, und
• einen Referenztaktverwaltungsblock (27, 127, 227), der so konfiguriert ist, dass er eine Einstellung des Referenztakts in dem Referenztaktmodul auf der Grundlage von Informationen aus dem ersten und dem zweiten Protokollstapelblock steuert.

2. Multi-SIM-Modem (2) nach Anspruch 1, das so konfiguriert ist, dass es eine anzuwendende Referenztakteinstellung auf der Grundlage einer Menge von gemessenen ersten und/oder zweiten Frequenzfehlern unter Verwendung eines AFC-Algorithmus bestimmt.

3. Multi-SIM-Modem nach Anspruch 1, wobei die Informationen den ersten und den zweiten gemessenen Frequenzfehler umfassen und wobei der Referenztaktverwaltungsblock (227) so konfiguriert ist, dass er:
• den gemessenen ersten und zweiten Frequenzfehler aus dem ersten bzw. dem zweiten Protokollstapelblock (226a, 226b) erhält,
• eine Referenztakteinstellung auf der Grundlage des gemessenen ersten und zweiten Frequenzfehlers bestimmt und
• die Einstellung des Referenztakts in dem Referenztaktmodul (23) auf der Grundlage der bestimmten Referenztakteinstellung steuert.

4. Multi-SIM-Modem nach Anspruch 3, wobei die Bestimmung einer Referenztakteinstellung unter Verwendung einer ersten Anzahl von gemessenen ersten Frequenzfehlern aus dem ersten Protokollstapelblock (226a) und einer zweiten Anzahl von gemessenen zweiten Frequenzfehlern aus dem zweiten Protokollstapelblock (226b) erfolgt, wobei die erste und die zweite Anzahl gleich sind.

5. Multi-SIM-Modem nach Anspruch 1, wobei der Referenztaktverwaltungsblock (127) so konfiguriert ist, dass er:
• unter dem ersten und dem zweiten Protokollstapelblock (126a, 126b) den Protokollstapelblock auswählt, der zur Bestimmung einer Referenztakteinstellung zu verwenden ist,
• aus dem ausgewählten Protokollstapelblock eine auf der Grundlage eines durch den ausgewählten Protokollstapelblock gemessenen Frequenzfehlers bestimmte Referenztakteinstellung erhält und
• die Einstellung des Referenztakts in dem Referenztaktmodul (23) auf der Grundlage der erhaltenen Referenztakteinstellung steuert.

6. Multi-SIM-Modem nach Anspruch 5, wobei die Informationen eine DRX-ZyklusInformation und/oder eine Funkqualitätsinformation umfassen und wobei die Auswahl von einer Freizustand-DRX-Konfiguration und/oder von einer Freizustand-Dienstgüte abhängt.

7. Multi-SIM-Modem nach Anspruch 1, das ferner so angepasst ist, dass es Nachrichten empfängt, die im Zusammenhang mit einer dritten Teilnehmeridentität stehen, wobei der Referenztaktverwaltungsblock (227) so konfiguriert ist, dass er:
• den gemessenen ersten und zweiten Frequenzfehler aus dem ersten bzw. dem zweiten Protokollstapelblock (226a, 226b) erhält und eine Referenztakteinstellung auf der Grundlage des gemessenen ersten und zweiten Frequenzfehlers bestimmt,
• unter der aus dem ersten und dem zweiten Protokollstapelblock bestimmten Referenztakteinstellung und einer Referenztakteinstellung aus dem dritten Protokollstapelblock diejenige auswählt, die zur Steuerung der Einstellung des Referenztakts in dem Referenztaktmodul (23) zu verwenden ist,
• die Einstellung des Referenztakts in dem Referenztaktmodul (23) auf der Grundlage der ausgewählten Referenztakteinstellung steuert.

8. Mobile Vorrichtung (1), umfassend ein Multi-SIM-Modem (2) nach einem der Ansprüche 1 bis 7 und ein Sende-Empfangsmodul (3) zum Empfangen und/oder Senden von Signalen, wobei das Sende-Empfangsmodul an das Multi-SIM-Modem gekoppelt ist.

9. Mobile Vorrichtung nach Anspruch 8, die ferner mit mindestens einem ersten und einem zweiten SIM verbunden werden kann.

10. Datenverarbeitungsverfahren zur Steuerung einer Einstellung eines Referenztakts eines Multi-SIM-Modems (2), das so angepasst werden kann, dass es Nachrichten empfängt, die im Zusammenhang mit mindestens zwei Teilnehmeridentitäten (4a, 4b) stehen, umfassend die folgenden Schritte:
• Messen, an einem ersten Protokollstapelblock (26a, 126a, 226a) des Multi-SIM-Modems, eines ersten Frequenzfehlers zwischen dem Multi-SIM-Modem und einer Zelle im Zusammenhang mit einer ersten Teilnehmeridentität,
• Messen, an einem zweiten Protokollstapelblock (26b, 126b, 226b) des Multi-SIM-Modems, eines zweiten Frequenzfehlers zwischen dem Multi-SIM-Modem und einer Zelle im Zusammenhang mit einer zweiten Teilnehmeridentität und
• Steuern, an einem Referenztaktverwaltungsblock (27, 127, 227) des Multi-SIM-Modems, einer Einstellung des Referenztakts auf der Grundlage von Informationen aus dem ersten und dem zweiten Protokollstapelblock.

11. Verfahren nach Anspruch 10, wobei die Informationen den ersten und den zweiten gemessenen Frequenzfehler umfassen, wobei das Verfahren die folgenden Schritte an dem Referenztaktverwaltungsblock (227) umfasst:
• Erhalten des gemessenen ersten und zweiten Frequenzfehlers aus dem ersten bzw. dem zweiten Protokollstapelblock (226a, 226b),
• Bestimmen einer Referenztakteinstellung auf der Grundlage des gemessenen ersten und zweiten Frequenzfehlers und
• Steuern der Einstellung des Referenztakts auf der Grundlage der bestimmten Referenztakteinstellung.

12. Verfahren nach Anspruch 10, umfassend die folgenden Schritte an dem Referenztaktverwaltungsblock (127):
• Auswählen des zur Bestimmung einer Referenztakteinstellung zu verwendenden Protokollstapelblocks unter dem ersten und dem zweiten Protokollstapelblock (126a, 126b),
• Erhalten einer auf der Grundlage eines durch den ausgewählten Protokollstapelblock gemessenen Frequenzfehlers bestimmten Referenztakteinstellung aus dem ausgewählten Protokollstapelblock und
• Steuern der Einstellung des Referenztakts in dem Referenztaktmodul auf der Grundlage der erhaltenen Referenztakteinstellung.

13. Verfahren nach Anspruch 12, wobei die Informationen eine DRX-Zyklus-Information und eine Funkqualitätsinformation umfassen und wobei die Auswahl von einer Freizustand-DRX-Konfiguration und/oder von einer Freizustand-Dienstgüte abhängt.

14. Computerprogrammprodukt, umfassend einen maschinell lesbaren Datenträger, auf dem sich ein Computerprogramm befindet, das Programmbefehle umfasst, wobei das Computerprogramm in eine Datenverarbeitungseinheit geladen werden kann und so angepasst ist, dass es die Datenverarbeitungseinheit zum Ausführen der Schritte nach einem der Ansprüche 10 bis 13 veranlasst, wenn das Computerprogramm durch die Datenverarbeitungseinheit laufen gelassen wird.

## Revendications

1. Modem à SIM multiples (2) adapté pour recevoir des messages connexes à au moins deux identités d'abonné (4a, 4b), **caractérisé en ce qu'**il comprend :
- un module d'horloge de référence (23) configuré pour définir une horloge de référence pour le modem à SIM multiples,
- un premier bloc de pile de protocoles (26a, 126a, 226a) configuré pour mesurer une première erreur de fréquence entre le modem à SIM multiples et une cellule connexe à une première identité d'abonné,
- un deuxième bloc de pile de protocoles (26b, 126b, 226b) configuré pour mesurer une seconde erreur de fréquence entre le modem à SIM multiples et une cellule connexe à une deuxième identité d'abonné, et
- un bloc de gestion d'horloge de référence (27, 127, 227) configuré pour commander un ajustement de l'horloge de référence dans le module d'horloge de référence, en fonction d'informations à partir des premier et deuxième blocs de pile de protocoles.

2. Modem à SIM multiples (2) selon la revendication 1, configuré pour déterminer un ajustement d'horloge de référence destiné à être appliqué, en fonction d'un jeu de premières et/ou secondes erreurs de fréquence mesurées, en utilisant un algorithme AFC.

3. Modem à SIM multiples selon la revendication 1, dans lequel les informations comprennent les première et seconde erreurs de fréquence mesurées et dans lequel le bloc de gestion d'horloge de référence (227) est configuré pour :
- obtenir les première et seconde erreurs de fréquence mesurées à partir des premier et deuxième blocs de pile de protocoles (226a, 226b) respectivement,
- déterminer un ajustement d'horloge de référence en fonction des première et seconde erreurs de fréquence mesurées, et
- commander l'ajustement de l'horloge de référence dans le module d'horloge de référence (23) en fonction de l'ajustement d'horloge de référence déterminé.

4. Modem à SIM multiples selon la revendication 3, dans lequel la détermination d'un ajustement d'horloge de référence est réalisée en utilisant un premier nombre de premières erreurs de fréquence mesurées à partir du premier bloc de pile de protocoles (226a), et un second nombre de secondes erreurs de fréquence mesurées à partir du deuxième bloc de pile de protocoles (226b), les premier et second nombres étant égaux.

5. Modem à SIM multiples selon la revendication 1, dans lequel le bloc de gestion d'horloge de référence (127) est configuré pour :
- sélectionner, parmi les premier et deuxième blocs de pile de protocoles (126a, 126b), le bloc de pile de protocoles destiné à être utilisé pour déterminer un ajustement d'horloge de référence,
- obtenir, à partir du bloc de pile de protocoles sélectionné, un ajustement d'horloge de référence déterminé en fonction d'une erreur de fréquence mesurée par le bloc de pile de protocoles sélectionné, et
- commander l'ajustement de l'horloge de référence dans le module d'horloge de référence (23) en fonction de l'ajustement d'horloge de référence reçu.

6. Modem à SIM multiples selon la revendication 5, dans lequel les informations comprennent au moins des informations de cycle DRX et/ou des informations de qualité radio et dans lequel la sélection dépend d'une configuration de réception discontinue au repos et/ou d'une qualité de service au repos.

7. Modem à SIM multiples selon la revendication 1, en outre adapté pour recevoir des messages connexes à une troisième identité d'abonné, le bloc de gestion d'horloge de référence (227) étant configuré pour :
- obtenir les première et seconde erreurs de fréquence mesurées à partir des premier et deuxième blocs de pile de protocoles (226a, 226b) respectivement, et déterminer un ajustement d'horloge de référence en fonction des première et seconde erreurs de fréquence mesurées,
- sélectionner, parmi l'ajustement d'horloge de référence déterminé à partir des premier et deuxième blocs de pile de protocoles et un ajustement d'horloge de référence à partir du troisième bloc de pile de protocoles, celui destiné à être utilisé pour commander l'ajustement de l'horloge de référence dans le module d'horloge de référence (23),
- commander l'ajustement de l'horloge de référence dans le module d'horloge de référence (23) en fonction de l'ajustement d'horloge de référence sélectionné.

8. Dispositif mobile (1) comprenant un modem à SIM multiples (2) selon une des revendications 1 à 7, et un module de réception/transmission (3) pour recevoir et/ou transmettre des signaux, le module de réception/transmission étant couplé au modem à SIM multiples.

9. Dispositif mobile selon la revendication 8, associable en outre à au moins des première et seconde SIM.

10. Procédé de traitement de données pour commander un ajustement d'une horloge de référence d'un modem à SIM multiples (2) adaptable pour recevoir des messages connexes à au moins deux identités d'abonné (4a, 4b), comprenant des étapes de :
- la mesure, dans un premier bloc de pile de protocoles (26a, 126a, 226a) du modem à SIM multiples, d'une première erreur de fréquence entre le modem à SIM multiples et une cellule connexe à une première identité d'abonné,
- la mesure, dans un deuxième bloc de pile de protocoles (26b, 126b, 226b) du modem à SIM multiples, d'une seconde erreur de fréquence entre le modem à SIM multiples et une cellule connexe à une deuxième identité d'abonné, et
- la commande, dans un bloc de gestion d'horloge de référence (27, 127, 227) du modem à SIM multiples, d'un ajustement de l'horloge de référence, en fonction d'informations à partir des premier et deuxième blocs de pile de protocoles.

11. Procédé selon la revendication 10, dans lequel les informations comprennent les première et seconde erreurs de fréquence mesurées, le procédé comprenant des étapes de, dans le bloc de gestion d'horloge de référence (227) :
- l'obtention des première et seconde erreurs de fréquence mesurées à partir des premier et deuxième blocs de pile de protocoles (226a, 226b) respectivement,
- la détermination d'un ajustement d'horloge de référence en fonction des première et seconde erreurs de fréquence mesurées, et
- la commande de l'ajustement de l'horloge de référence en fonction de l'ajustement d'horloge de référence déterminé.

12. Procédé selon la revendication 10, comprenant des étapes de, dans le bloc de gestion d'horloge de référence (127) :
- la sélection, parmi les premier et deuxième blocs de pile de protocoles (126a, 126b), du bloc de pile de protocoles destiné à être utilisé pour déterminer un ajustement d'horloge de référence,
- l'obtention, à partir du bloc de pile de protocoles sélectionné, d'un ajustement d'horloge de référence déterminé en fonction d'une erreur de fréquence mesurée par le bloc de pile de protocoles sélectionné, et
- la commande de l'ajustement de l'horloge de référence dans le module d'horloge de référence en fonction de l'ajustement d'horloge de référence reçu.

13. Procédé selon la revendication 12, dans lequel les informations comprennent au moins des informations de cycle DRX et/ou des informations de qualité radio et dans lequel la sélection dépend d'une configuration de réception discontinue au repos et/ou d'une qualité de service au repos.

14. Produit programme d'ordinateur comprenant un support lisible par ordinateur, comportant, sur celui-ci, un programme d'ordinateur comprenant des instructions de programme, le programme d'ordinateur étant chargeable dans une unité de traitement de données et adapté pour faire en sorte que l'unité de traitement de données réalise les étapes d'une quelconque des revendications 10 à 13 lorsque le programme d'ordinateur est exécuté par l'unité de traitement de données.
